# EUROPÄISCHE PATENTANMELDUNG

(11) **EP 4 112 268 A1**
(43) Veröffentlichungstag der Anmeldung: **04.01.2023**
(21) Anmeldenummer: 22182520.1
(22) Anmeldetag: 01.07.2022
(51) Int. Cl.: B29C 45/76

(54) **VERFAHREN ZUM BETREIBEN EINER SPRITZGIESSMASCHINE UND SPRITZGIESSMASCHINE**

(30) Priorität: 01.07.2021 DE 102021116984
(71) Anmelder: Guangdong Yizumi Precision Machinery Co., Ltd., Foshang City, Guangdong 528306 (CN); YIZUMI Germany GmbH, 52477 Alsdorf (DE)
(72) Erfinder: Günzel, Timo, 52477 Alsdorf (DE)
(74) Vertreter: Hoefer & Partner Patentanwälte mbB

(57) **Zusammenfassung**

Verfahren zum Betreiben einer Spritzgießmaschine (1), welche eine Spritzeinheit (10) mit einem Zylinder (2) und einer im Zylinder (2) aufgenommenen Schnecke (3) aufweist, zum Plastifizieren eines Werkstoffs (4), insbesondere Kunststoff, und zum Einspritzen des plastifizierten Werkstoffs (4) in ein Spritzgießwerkzeug (5), umfassend die Schritte: Ermitteln einer Verweilzeit des Werkstoffs (4), insbesondere eines Schussvolumens eines bevorstehenden Schusses (40), in der Spritzeinheit (10), Vergleich der ermittelten Verweilzeit mit einem vordefinierten Verweilzeit-Bereich, Betätigen einer Heizvorrichtung (6) der Spritzeinheit (10) basierend auf der ermittelten Verweilzeit, wenn sich die Verweilzeit innerhalb des Verweilzeit-Bereichs befindet, und Stoppen der Spritzeinheit (10) wenn die ermittelte Verweilzeit den Verweilzeit-Bereich verlässt, oder Regeln der Spritzeinheit (10) derart, dass die Verweilzeit innerhalb des Verweilzeit-Bereichs bleibt.

## Beschreibung

Die Erfindung betrifft ein Verfahren zum Betreiben einer Spritzgießmaschine sowie eine Spritzgießmaschine.

Spritzgießmaschinen sind aus dem Stand der Technik in vielfältigen Ausführungen bekannt. Meist wird pulverförmiger Werkstoff in eine Schnecken-Zylinder Kombination eingebracht, dort plastifiziert, und anschließend in ein Werkzeug eingespritzt. Zum Betreiben der Produktionsprozesse an Spritzgießmaschinen werden verschiedene Maschinenparameter, wie zum Beispiel Zykluszeiten, Einspritzzeiten, Schneckenhub oder dergleichen während des Betriebs der Spritzgießmaschine gesteuert. Eine Auslegung der Spritzgießmaschine bezüglich solcher Parameter erfolgt üblicherweise für ein spezielles herzustellendes Produkt. Insbesondere bei einem Produktwechsel ist dabei eine Anpassung der Parameter, um optimale Materialeigenschaften bei dem Produkt zu erhalten, häufig nur durch manuelles und iteratives Anpassen möglich. Insbesondere führt dies in der Regel zu einem hohen Material- und Energieverbrauch.

Es ist Aufgabe der Erfindung, ein Verfahren zum Betreiben einer Spritzgießmaschine und eine Spritzgießmaschine bereitzustellen, wobei stets eine optimale Auslastung der Spritzgießmaschine ermöglicht werden kann, um effizient mit geringem Energieaufwand, geringem Materialverbrauch und niedrigen Kosten Kunststoffteile spritzen zu können.

Die Lösung dieser Aufgabe erfolgt durch ein Verfahren zum Betreiben einer Spritzgießmaschine mit den Merkmalen des Anspruchs 1, sowie mit einer Spritzgießmaschine mit den Merkmalen des Anspruchs 14.

Das erfindungsgemäße Verfahren zum Betreiben einer Spritzgießmaschine bietet dabei den Vorteil, dass zuverlässig verschiedenartige Bauteile mit hoher Qualität bei geringem Material-und Energieaufwand hergestellt werden können.

Dies wird erfindungsgemäß erreicht durch ein Verfahren zum Betreiben einer Spritzgießmaschine, wobei die Spritzgießmaschine eine Spritzeinheit mit einem Zylinder und einer im Zylinder aufgenommenen Schnecke aufweist, um einen Werkstoff zu plastifizieren und den plastifizierten Werkstoffs in ein Spritzgießwerkzeug einzuspritzen, und wobei das Verfahren die folgenden Schritte umfasst:
- Ermitteln einer Verweilzeit des Werkstoffs, welcher sich innerhalb der Spritzeinheit befindet,
- Vergleich der ermittelten Verweilzeit mit einem vordefinierten Verweilzeit-Bereich,
- Betätigen einer Heizvorrichtung der Spritzeinheit basierend auf der ermittelten Verweilzeit, wenn sich die Verweilzeit innerhalb des Verweilzeit-Bereichs befindet, und
- Stoppen der Spritzeinheit, wenn die ermittelte Verweilzeit den Verweilzeit-Bereich verlässt, oder Regeln der Spritzeinheit derart, dass die Verweilzeit innerhalb des Verweilzeit-Bereichs verbleibt.

Als Verweilzeit wird dabei eine Zeit angesehen, welche ein bestimmter Teil des Werkstoffs innerhalb der Spritzeinheit verbringt, also welche seit dem Einfüllen dieses Teils des Werkstoffs in die Spritzeinheit vergangen ist. Insbesondere entspricht die Verweilzeit der Zeit, für welche der Werkstoff in der Spritzeinheit plastifiziert wird, also beispielsweise geheizt oder auf Temperatur gehalten wird.

Vorzugsweise erfolgt das Ermitteln der Verweilzeit dabei speziell für ein Schussvolumen eines bevorstehenden Schusses in der Spritzeinheit. Das Schussvolumen entspricht dabei dem Anteil des Werkstoffs innerhalb der Spritzeinheit, welcher bei dem nächsten Spritzzyklus abgespritzt wird. Vorzugsweise kann in diesem Fall die maximale Verweilzeit als eine gesamte Zeit, welche der Teil des Werkstoffs im Schussvolumen innerhalb der Spritzeinheit bis zum Ausspritzen verbringt, angesehen werden.

Durch das Ermitteln der Verweilzeit können damit besonders genaue Informationen über den aktuellen Materialzustand des Werkstoffs innerhalb der Spritzeinheit gewonnen werden. Die Verweilzeit ist dabei maßgeblich verantwortlich für die Qualität des herzustellenden Bauteils. Wird beispielsweise Werkstoff nach zu kurzer Verweilzeit eingespritzt, kann es vorkommen, dass der Werkstoff noch nicht vollständig plastifiziert ist. Dadurch können noch unaufgeschmolzene Feststoffteile in der auszuspritzenden Werkstoff-Schmelze vorliegen. Einerseits kann es dadurch beispielsweise zu Oberflächenfehlern und zu einer negativen Beeinflussung der mechanischen Kennwerte des herzustellenden Bauteils kommen. Andererseits ist ein noch nicht vollständig aufgeschmolzener Werkstoff zähfließender, was zu höheren Belastungen bis hin zu Beschädigungen der Spritzeinheit führen kann. Demgegenüber kann es bei zu langer Verweilzeit aufgrund zu starker Wärmezufuhr zu Farbveränderungen und zum Abbau der mechanischen Eigenschaften des Werkstoffs führen. Zudem können sich bei zu langer Wärmebelastung Stoffe abspalten, welche die Spritzeinheit beispielsweise korrosiv angreifen und zu einem erhöhten oder frühzeitigen Verschleiß führen können.

Die Berücksichtigung der Verweilzeit beim Betreiben der Spritzgießmaschine bietet dabei zahlreiche Vorteile beim Spritzgießen von Bauteilen. Insbesondere können durch Beeinflussen des Betriebs der Spritzgießmaschine so, dass die Verweilzeit stets innerhalb des Verweilzeit-Bereichs gehalten wird, optimale Werkstoffeigenschaften beim Spritzgießen sichergestellt werden. Dadurch wird einerseits eine hohe Qualität des herzustellenden Bauteils ermöglicht und andererseits ein verschleißarmer Betrieb der Spritzgießmaschine ermöglicht. Alternativ kann für den Fall, dass die ermittelte Verweilzeit den Verweilzeit-Bereich verlässt, die Spritzeinheit gestoppt werden, sodass eine Beschädigung der Spritzeinheit und ein Ausspritzen des Werkstoffs mit unzureichenden Materialeigenschaften vermieden werden kann. Zudem kann hierdurch ein Materialverbrauch beim Betreiben der Spritzgießmaschine besonders gering gehalten werden, da beispielsweise Ausschussteile aufgrund von Verweilzeiten außerhalb des Verweilzeit-Bereichs vermieden werden können.

Das Verfahren erlaubt somit eine permanente Kalkulation, Beobachtung und Überwachung einer Auslastung der Spritzeinheit.

Hierfür kann einerseits die Heizvorrichtung der Spritzeinheit automatisch basierend auf der ermittelten Verweilzeit betätigt werden, sofern sich die Verweilzeit noch innerhalb des Verweilzeit-Bereichs befindet. Vorzugsweise erfolgt die Betätigung der Heizvorrichtung so, dass bei Absinken der Verweilzeit im Vergleich zu einer optimalen Verweilzeit eine Erhöhung der Heizleistung der Heizvorrichtung vorgenommen wird, um die gewünschten optimalen Materialeigenschaften des herzustellenden Bauteils zu ermöglichen. Bei einem Erhöhen der Verweilzeit kann die Heizleistung der Heizvorrichtung vorzugsweise verringert werden, um ein zu starkes Heizen beim Plastifizieren des Werkstoffs zu vermeiden. Eine solche proaktive Heizungsregelung bietet dabei den weiteren Vorteil eines besonders geringen Energieverbrauchs der Spritzgießmaschine. Insbesondere kann der Energieverbrauch der Spritzgießmaschine reduziert werden, beispielsweise gegenüber einem Betrieb bei vorgegebener gleicher Heizungssteuerung während des gesamten Betriebs.

Weiterhin können, insbesondere bei Annäherung der Verweilzeit an eine der Grenzen des Verweilzeit-Bereichs, weitere Maßnahmen ergriffen werden, um eine Verschlechterung der Bauteilqualität oder eine Beschädigung der Spritzgießmaschine aufgrund von zu geringem oder zu starkem Plastifizieren des Werkstoffs zu vermeiden. Hierfür kann einerseits die Spritzeinheit derart geregelt werden, dass die Verweilzeit innerhalb des Verweilzeit-Bereichs verbleibt. In diesem Fall kann beispielsweise eine automatische Anpassung der Betriebsparameter von der Spritzgießmaschine selbst vorgenommen werden. Alternativ, beispielsweise, wenn die Spritzgießmaschine in einem manuellen Betrieb durch den Bediener betrieben wird, kann als Notmaßnahme zur Verhinderung von Schäden an der Spritzgießmaschine oder zur Vermeidung von Ausschuss bei den herzustellenden Bauteilen ein Stoppen der Spritzeinheit erfolgen, wenn die ermittelte Verweilzeit den Verweilzeit-Bereich verlässt.

Die Unteransprüche haben bevorzugte Weiterbildungen der Erfindung zum Inhalt.

Bevorzugt wird die Verweilzeit basierend auf einem Schneckenkanalvolumen und/oder einer Schneckenposition und/oder einer Zykluszeit ermittelt, sowie insbesondere einer Geometrie von Schnecke und Zylinder. Besonders bevorzugt wird die Schneckenposition dabei in einem Zustand nach einem Einspritzvorgang betrachtet. Das heißt, dadurch kann ein Massepolster des noch in der Spritzeinheit vorhandenen Werkstoffvolumens berücksichtigt werden. Somit kann besonders präzise die Verweilzeit ermittelt werden, um optimale Bauteileigenschaften zu erhalten. Als Zykluszeit wird dabei die Zeit zwischen zwei aufeinanderfolgenden Einspritzvorgängen angesehen. Dadurch kann einfach und direkt die Zeit berücksichtigt werden, welche für den Werkstoff zum Plastifizieren zur Verfügung steht.

Besonders bevorzugt weist die Spritzgießmaschine ferner einen werkzeugseitigen Heißkanal auf. Die Verweilzeit wird dabei basierend auf einem Volumen des Heißkanals ermittelt. Das heißt, für den Fall einer Spritzgießmaschine mit Heißkanal wird zusätzlich das Volumen des sich im Heißkanal befindlichen Werkstoffs mit berücksichtigt, wodurch die optimalen Betriebsparameter hinsichtlich der Verweilzeit besonders genau überwacht und eingestellt werden können.

Vorzugsweise wird der vordefinierte Verweilzeit-Bereich basierend auf Materialeigenschaften des Werkstoffs ermittelt. Das heißt, der Verweilzeit-Bereich wird abhängig von den physikalischen Eigenschaften des mittels der Spritzgießmaschine zu verarbeitenden Werkstoffs bestimmt. Vorzugsweise kann der Bediener der Spritzgießmaschine dabei eine Bezeichnung und/oder die Materialeigenschaften des zu verarbeitenden Werkstoffs, insbesondere mittels einer Eingabevorrichtung, eingeben, sodass die Spritzgießmaschine automatisch den entsprechenden Verweilzeit-Bereich ermitteln kann. Insbesondere kann die Spritzgießmaschine somit verschiedenste Werkstoffe optimal verarbeiten, sodass auch bei deutlich voneinander abweichenden Materialeigenschaften verschiedener Werkstoffe stets hochqualitative Bauteile mit den gewünschten Materialeigenschaften hergestellt werden können.

Weiter bevorzugt werden zum Regeln der Spritzeinheit der Spritzgießmaschine, insbesondere für den Fall, dass die Verweilzeit innerhalb des Verweilzeit-Bereichs verbleiben soll, einer oder mehrere der folgenden Betriebsparameter der Spritzeinheit geregelt: Zykluszeit, Schneckendrehzahl, Staudruck, Schneckenhub. Vorzugsweise kann hierbei ein automatischer Betrieb der Spritzgießmaschine erfolgen, wobei die Spritzgießmaschine automatisch die entsprechenden Betriebsparameter der Spritzeinheit regelt. Dadurch kann auf besonders einfache und für den Bediener komfortable Weise ein Betrieb der Spritzgießmaschine ermöglicht werden, sodass Bauteile mit hoher Materialqualität in kurzer Zeit und bei geringem Materialverbrauch hergestellt werden können.

Vorzugsweise wird mittels der Heizvorrichtung der Spritzgießmaschine der Zylinder/oder die Schnecke und/oder ein werkzeugseitiger Heißkanal der Spritzgießmaschine verweilzeitgeregelt geheizt. Das heißt, basierend auf der Verweilzeit des Werkstoffs in der Spritzeinheit erfolgt eine automatische Anpassung der Erwärmung des Werkstoffs mittels der Heizvorrichtung. Beispielsweise kann dabei die Heizleistung automatisch abgesenkt oder erhöht werden, um bei Abweichen der ermittelten Verweilzeit von einer vorgegebenen optimalen Verweilzeit möglichst gute Materialeigenschaften des herzustellenden Bauteils erreichen zu können.

Besonders bevorzugt wird dem Bediener der Spritzgießmaschine mittels einer Anzeigevorrichtung permanent die aktuelle Verweilzeit des Werkstoffs angezeigt. Das heißt, neben einem automatischen Monitoring der Verweilzeit seitens der Spritzgießmaschine kann der Bediener stets Informationen über die aktuelle Verweilzeit des Werkstoffs erhalten, wodurch beispielsweise auch eine manuelle Anpassung von Betriebsparametern der Spritzgießmaschine vereinfacht wird. Vorzugsweise wird die aktuelle Verweilzeit hierbei in Relation zu dem Verweilzeit-Bereich angezeigt.

Bevorzugt wird mittels einer Anzeigevorrichtung ein Signal an den Bediener der Spritzgießmaschine ausgegeben, wenn die erfasste Verweilzeit sich einer der Grenzen des Verweilzeit-Bereichs nähert. Alternativ oder zusätzlich kann ein Signal ausgegeben werden, wenn die momentane Verweilzeit eine der Grenzen des Verweilzeit-Bereichs überschreitet. Das heißt, der Bediener erhält von der Spritzgießmaschine ein, vorzugsweise optisches und/oder akustisches und/oder optisches Signal, mittels welchem signalisiert wird, dass bei der momentanen Betriebsweise Werkstoff mit nahe an oder außerhalb der tolerierbaren Grenzen liegender Verweilzeit innerhalb der Spritzeinheit vorliegt. Dadurch kann der Bediener beispielsweise manuell eine Anpassung der Betriebsparameter der Spritzgießmaschine vornehmen, um den Betrieb zu optimieren und die Werkstoffeigenschaften zu verbessern.

Vorzugsweise werden mittels einer Anzeigevorrichtung dem Bediener der Spritzgießmaschine Hinweise zum Anpassen der Betriebsparameter der Spritzgießmaschine gegeben, um den Spritzgießvorgang zu optimieren. Beispielsweise können dem Bediener Hinweise in Form von Soll-Werten der Betriebsparameter der Spritzeinheit angezeigt werden, welche für eine optimale Betriebsweise der Spritzgießmaschine im Hinblick auf eine zur Erreichung gewünschter Materialeigenschaften des herzustellenden Bauteils einzustellende Verweilzeit geeignet ist. Dadurch kann eine für den Bediener besonders einfache und komfortable Bedienung der Spritzgießmaschine ermöglicht werden.

Besonders bevorzugt werden beim Ermitteln der Verweilzeit Stillstandszeiten der Spritzeinheit berücksichtigt. Das heißt, Zeiten, in welchen die Spritzeinheit stillsteht, also wenn beispielsweise kein Plastifizieren des Werkstoffs durch Drehung der Schnecke und/oder durch Heizen erfolgt, fließen mit in die Berechnung der Verweilzeit ein. Beispielsweise kann dadurch auch nach dem Stillstand der Spritzeinheit besonders schnell Werkstoff mit optimalen Eigenschaften in das Spritzgießwerkzeug eingespritzt werden. Insbesondere können dadurch auch bei Unterbrechungen des Betriebs der Spritzeinheit qualitativ hochwertige Bauteile mit geringem Ausschuss und bei niedrigem Materialverbrauch hergestellt werden.

Bevorzugt umfasst das Verfahren ferner den folgenden Schritt, welcher insbesondere im Falle eines Überschreitens einer Obergrenze des Verweilzeit-Bereichs ausgeführt wird: Ermitteln eines auszutragenden Werkstoffvolumens aus der Spritzeinheit, welches vor dem Start eines Produktionszyklus der Spritzeinheit auszutragen ist. Insbesondere wird in diesem Fall die Spritzeinheit automatisch gestoppt. Als Produktionszyklus wird dabei angesehen, dass plastifizierter Werkstoff in das Spritzgießwerkzeug eingespritzt wird, um Bauteile zu erzeugen. Das heißt, wenn die momentane Verweilzeit zumindest eines Teils des Werkstoffs in der Spritzeinheit größer ist als ein maximaler Wert des Verweilzeit-Bereichs, kann es zu einem Abbau der mechanischen Eigenschaften dieses Teil des Werkstoffs kommen, wodurch dieser nicht mehr für die Herstellung des Bauteils geeignet ist. Bei einem erneuten Start der Spritzeinheit wird vor dem Start des Produktionszyklus das ermittelte auszutragende Werkstoffvolumen aus der Spritzeinheit, beispielsweise mittels manueller oder automatischer Steuerung der Spritzeinheit, ausgetragen, sodass anschließend Werkstoff in das Spritzgießwerkzeug eingespritzt werden kann, dessen Verweilzeit innerhalb des Verweilzeit-Bereichs liegt. Dadurch kann sichergestellt werden, dass durch Stillstände der Spritzeinheit verursachte Störungen des Betriebs der Spritzgießmaschine sich nicht negativ auf die Bauteilqualität auswirkt.

Weiter bevorzugt wird basierend auf dem auszutragenden Werkstoffvolumen eine Anzahl an Abspritzzyklen ermittelt. Die ermittelte Anzahl an Abspritzzyklen ist dabei vor dem Start des Produktionszyklus der Spritzeinheit durchzuführen. Vorzugsweise wird die ermittelte Anzahl an Abspritzzyklen dem Bediener der Spritzgießmaschine, insbesondere mittels einer Anzeigevorrichtung angezeigt. Alternativ bevorzugt führt die Spritzgießmaschine automatisch die ermittelte Anzahl an Abspritzzyklen durch. Vorzugsweise werden die Anzahl der Abspritzzyklen zusätzlich basierend auf dem Schussvolumen eines einzelnen Schusses ermittelt. Insbesondere wird dabei jeweils die minimal erforderliche Anzahl an Abspritzzyklen ermittelt, welche notwendig ist, um das auszutragende Werkstoffvolumen aus der Spritzeinheit auszutragen. Dadurch wird ermöglicht, dass nur so viel Werkstoff ausgetragen wird, wie unbedingt notwendig ist, um einen problemlosen Neustart der Produktion durchzuführen. Dadurch kann ein besonders materialsparender und somit kostengünstiger Betrieb der Spritzgießmaschine ermöglicht werden.

Vorzugsweise umfasst das Verfahren ferner die folgenden Schritte, welche insbesondere im Falle eines Artikelwechsels ausgeführt werden:
- Ermitteln einer Aufheizzeit des Werkstoffs in der Spritzeinheit, insbesondere vor einem ersten Produktionszyklus nach dem Artikelwechsel, und
- Ermitteln eines Anfahrprozesses nach dem Artikelwechsel und basierend auf der Aufheizzeit. Als Artikelwechsel wird dabei ein Wechsel des mittels der Spritzgießmaschine herzustellenden Artikels angesehen. Vorzugsweise kann der ermittelte Anfahrprozess mittels einer Anzeigevorrichtung dem Bediener angezeigt werden. Alternativ kann die Spritzgießmaschine den Anfahrprozess automatisch durchführen. Durch Ermitteln der Aufheizzeit und des Anfahrprozesses nach dem Artikelwechsel kann ein besonders effizienter und flexibler Betrieb der Spritzgießmaschine bereitgestellt werden, da auch bei verschiedenen zu spritzenden Bauteilen stets die optimale Betriebsweise der Spritzgießmaschine automatisch ermittelt wird und damit beispielsweise durch den Artikelwechsel verursachte Stillstandszeiten auf ein Minimum reduziert werden können.

Weiterhin führt die Erfindung zu einer Spritzgießmaschine, welche ein Spritzgießwerkzeug, eine Spritzeinheit mit einem Zylinder und einer im Zylinder aufgenommen Schnecke, um einen Werkstoff, vorzugsweise Kunststoff, zu plastifizieren und um den plastifizierten Werkstoff in das Spritzgießwerkzeug einzuspritzen, umfasst. Weiterhin umfasst die Spritzgießmaschine eine Heizvorrichtung, welche eingerichtet ist zum Heizen der Spritzeinheit, eine Erfassungseinrichtung, welche eingerichtet ist eine Verweilzeit des Werkstoffs in der Spritzeinheit zu ermitteln, und eine Steuervorrichtung. Vorzugsweise ist die Erfassungseinheit dabei eingerichtet, eine Verweilzeit des Werkstoffs eines Schussvolumens eines bevorstehenden Schusses zu ermitteln. Die Steuervorrichtung ist dabei eingerichtet, die Heizvorrichtung basierend auf der ermittelten Verweilzeit zu betätigen, wenn sich die Verweilzeit innerhalb des Verweilzeit-Bereichs befindet. Weiterhin ist die Steuervorrichtung eingerichtet, die Spritzeinheit zu stoppen, für den Fall, dass die ermittelte Verweilzeit den Verweilzeit-Bereich verlässt, oder alternativ die Spritzeinheit derart zu regeln, dass die Verweilzeit innerhalb des Verweilzeit-Bereichs verbleibt. Besonders bevorzugt ist die Steuervorrichtung eingerichtet, das oben beschriebene Verfahren durchzuführen. Die Spritzgießmaschine zeichnet sich dadurch aus, dass eine besonders einfache und komfortable Bedienung ermöglicht wird, um Bauteile mit hoher Qualität auf einfache Weise und kostengünstig herstellen zu können.

Bevorzugt ist die Heizvorrichtung eingerichtet, den Zylinder und/oder die Schnecke und/oder einen Heißkanal der Spritzeinheit zu heizen. Dadurch kann besonders gezielt Energie in den Werkstoff eingebracht werden, insbesondere zusätzlich zu der basierend auf der Rotation der Schnecke im Zylinder entstehenden Energie, um den Werkstoff zu plastifizieren.

Vorzugsweise umfasst die Spritzgießmaschine ferner eine Anzeigevorrichtung, welche eingerichtet ist zur Anzeige der ermittelten Verweilzeit. Insbesondere können mit der Anzeigevorrichtung auch weitere Informationen angezeigt werden, wie beispielsweise der Verweilzeit-Bereich. Zusätzlich oder alternativ können auch weitere die Bedienung der Spritzgießmaschine unterstützende Informationen angezeigt werden, wie beispielsweise Handlungsanweisungen an den Bediener, welche vorteilhafte Einstellungen für Betriebsparameter der Spritzgießmaschine angeben können, insbesondere um hinsichtlich hoher Bauteilqualität optimale Verweilzeiten zu erreichen. Dadurch kann ein für den Bediener besonders einfacher und komfortabler Betrieb der Spritzgießmaschine ermöglicht werden.

Besonders bevorzugt umfasst die Spritzgießmaschine ferner eine Eingabevorrichtung, mittels welcher eine manuelle Eingabe von Betriebsparametern ermöglicht wird. Vorzugsweise kann der Bediener dabei wählen zwischen einer automatischen Anpassung eines oder mehrerer Betriebsparameter, und einer manuellen Einstellmöglichkeit der Betriebsparameter.

Weitere Einzelheiten, Vorteile und Merkmale der vorliegenden Erfindung ergeben sich aus nachfolgender Beschreibung eines Ausführungsbeispiels anhand der Zeichnung. Funktional gleiche Bauteile sind dabei stets mit denselben Bezugszeichen gekennzeichnet. Es zeigt:

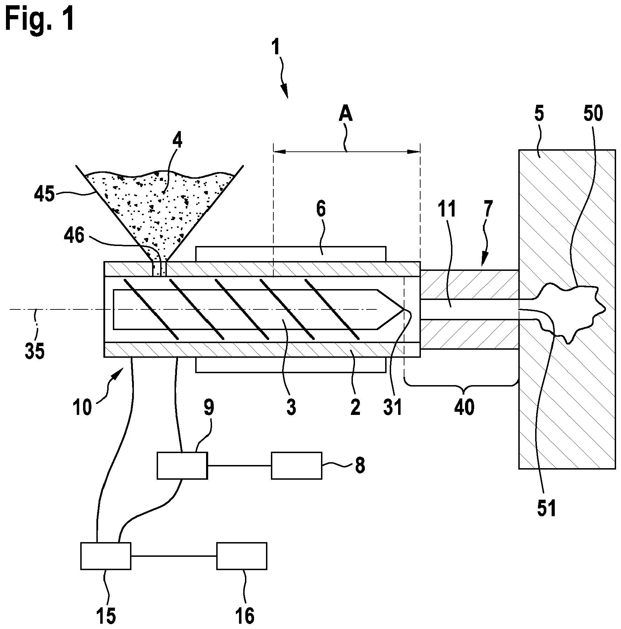

- Fig. 1: eine stark vereinfachte schematische Ansicht einer Spritzgießmaschine gemäß einem bevorzugten Ausführungsbeispiel der Erfindung.

In der Figur 1 ist eine stark vereinfachte schematische Ansicht einer Spritzgießmaschine 1 gemäß einem bevorzugten Ausführungsbeispiel der Erfindung dargestellt. Die Spritzgießmaschine 1 umfasst eine Spritzeinheit 10 mit einem Zylinder 2 und mit einer Schnecke 3, welche im Zylinder 2 aufgenommen ist. Der Schnecke 3 kann von einem Werkstoffreservoir 45 ein Werkstoff 4 zugeführt werden. Insbesondere handelt es sich bei dem Werkstoff 4 um einen Kunststoff, welcher im Werkstoffreservoir 45 als Granulat oder Pulver vorliegt.

Der Werkstoff 4 kann innerhalb des Zylinders 2 durch Rotation der Schnecke 3 um eine Rotationsachse 35 plastifiziert, also geschmolzen, werden und entlang der Rotationsachse 35 in Richtung eines Spritzgießwerkzeugs 5 gefördert werden. Durch axiales Verschieben der Schnecke 3 im Zylinder 2 entlang der Rotationsachse 35 wird jeweils ein bestimmtes Schussvolumen eines, beispielhaft angedeuteten, Schusses 40 in eine Form 50 des Spritzgießwerkzeugs 5 eingespritzt, um dadurch Kunststoffbauteile herzustellen. Der plastifizierte Werkstoff 4 wird hierbei über einen Kanal 11 in das Spritzgießwerkzeug 5 eingespritzt.

Die Spritzgießmaschine 1 weist ferner eine Heizvorrichtung 6 auf, welche eingerichtet ist zum Heizen der Spritzeinheit 10. Im Detail kann hierbei der Zylinder 2 geheizt werden. Vorzugsweise ist alternativ oder zusätzlich auch ein Heizen der Schnecke 3 mittels der Heizvorrichtung 6 möglich.

Die Spritzgießmaschine 1 weist einen sogenannten Heißkanal 7 auf, innerhalb welchem sich der Kanal 11 befindet. Im Heißkanal 7 kann der Werkstoff 4 weiter geheizt werden. Alternativ kann auch eine Spritzgießmaschine 1 ohne Heißkanal 7 bereitgestellt werden. In diesem Fall würde der plastifizierte Werkstoff 4 vom Ende des Zylinders 2 direkt in das Spritzgießwerkzeug 5 eingespritzt werden.

Eine Betätigung der Spritzgießmaschine 1, insbesondere der Spritzeinheit 10 mit der Schnecke 3, der Heizvorrichtung 6 und des Heißkanals 7, erfolgt mittels einer Steuervorrichtung 15. Die Steuervorrichtung 15 ist dabei eingerichtet, entweder eine automatische Betätigung durchzuführen, oder die Betätigung basierend auf einer manuellen Eingabe durch einen Bediener der Spritzgießmaschine 1 durchzuführen. Hierfür umfasst die Spritzgießmaschine 1 eine Eingabevorrichtung 16, mittels welcher der Bediener Betriebsparameter der Spritzgießmaschine 1 manuell eingeben kann.

Weiterhin umfasst die Spritzgießmaschine 1 eine Erfassungsvorrichtung 9, welche eingerichtet ist, eine Verweilzeit des Werkstoffs 4 innerhalb der Spritzeinheit 10 zu ermitteln. Insbesondere wird hierbei eine Verweilzeit eines Schussvolumens des bevorstehenden Schusses 40 ermittelt. Als Verweilzeit wird dabei eine Zeit angesehen, für welche sich der entsprechende Teil des Werkstoffs 4 seit dem Einfüllen an einer Einfüllöffnung 46 innerhalb des Zylinders 2 befindet, also eine Gesamtdauer, für welche der Werkstoff 4 zum aktuellen Zeitpunkt plastifiziert wurde. Die maximal mögliche Verweilzeit ergibt sich dabei für die Dauer, für welche sich der Werkstoff 4 innerhalb der Spritzeinheit 10, also zwischen Einfüllöffnung 46 und einer Austrittsöffnung 51 des Heißkanals 7, befindet.

Die Verweilzeit wird dabei basierend auf einer aktuellen Schneckenposition, einer Zykluszeit eines Einspritzzyklusses und bekannten geometrischen Eigenschaften der Spritzeinheit, wie einem Schneckenkanalvolumen, und beispielsweise einer Steigung der Schnecke und einer Windungsanzahl der Schnecke, ermittelt. Das heißt, basierend auf den vorbekannten geometrischen Eigenschaften und der aktuellen Betriebsposition der Schnecke kann abgeschätzt werden, welche Verweilzeit beliebige Teilbereiche des Werkstoffs 4 in der Spritzeinheit 10 aufweisen.

Die Spritzgießmaschine 1 umfasst weiterhin eine Anzeigevorrichtung 8, welche mit der Erfassungsvorrichtung 9 verbunden ist, und welche eingerichtet ist, die ermittelte Verweilzeit anzuzeigen.

Die ermittelte Verweilzeit kann als Grundlage für eine Optimierung des Betriebs der Spritzgießmaschine 1 dienen, da anhand der Verweilzeit Informationen über einen aktuellen Zustand des Werkstoffs 4, insbesondere des bevorstehenden Schusses 40, gewonnen werden können. Basierend darauf können Betriebsparameter der Spritzgießmaschine 1 so angepasst werden, um einerseits Bauteile mit möglichst hoher Materialqualität herstellen zu können, und andererseits, um Schäden an der Spritzgießmaschine 1 zu vermeiden.

Hierfür wird die jeweils ermittelte Verweilzeit mit einem vorbestimmten Verweilzeit-Bereich verglichen. Der Verweilzeit-Bereich basiert auf Kennwerten der Spritzgießmaschine 1 sowie Materialeigenschaften des zu spritzenden Werkstoffs 4. Insbesondere gibt der Verweilzeit-Bereich einen Bereich vor, innerhalb welchem die Verweilzeit liegen darf, und außerhalb welchem keine optimalen Materialeigenschaften des Werkstoffs 4 mehr vorliegen. Das heißt, die momentane Verweilzeit sollte stets innerhalb des Verweilzeit-Bereichs liegen, um Beschädigungen der Spritzgießmaschine 1 und unzureichende Materialeigenschaften der herzustellenden Bauteile zu vermeiden.

Der Bediener kann dabei den Werkstoff 4 oder bestimmte Eigenschaften des Werkstoffs 4 mittels der Eingabevorrichtung 16 eingeben. Die Steuervorrichtung 15 berechnet daraufhin automatisch den Verweilzeit-Bereich. Vorzugsweise wird zudem eine optimale Soll-Verweilzeit, welche innerhalb des Verweilzeit-Bereichs liegt, ermittelt.

Beim Betrieb der Spritzgießmaschine 1 wird die momentane Verweilzeit permanent überwacht. Liegt die ermittelte momentane Verweilzeit innerhalb des Verweilzeit-Bereichs, so erfolgt mittels der Steuervorrichtung 15 eine automatische Betätigung der Heizvorrichtung 6 und/oder des Heißkanals 7 basierend auf der ermittelten Verweilzeit. Vorzugsweise erfolgt hierbei das Betätigen der Heizvorrichtung 6 und/oder des Heizkanals 7 so, dass eine Wärmezufuhr an den Werkstoff 4 verringert wird, wenn die momentane Verweilzeit größer ist als die Soll-Verweilzeit, und weiterhin so, dass eine Wärmezufuhr an den Werkstoff 4 erhöht wird, wenn die momentane Verweilzeit kleiner ist als die Soll-Verweilzeit. Das heißt, es erfolgt eine Anpassung der Plastifizierung des Werkstoffs 4 über die Wärmezufuhr automatisiert und vom Bediener unbemerkt im Hintergrund. Dadurch können die optimalen Materialeigenschaften bei der Herstellung der Bauteile auf einfache und für den Bediener besonders komfortable Weise sichergestellt werden.

Die ermittelte Verweilzeit wird dabei permanent mittels der Anzeigevorrichtung 8 dem Bediener der Spritzgießmaschine 1 angezeigt. Zudem werden mittels der Anzeigevorrichtung 8 Hinweise zum Anpassen der Betriebsparameter der Spritzgießmaschine 1 angezeigt, sodass der Bediener manuell die Betriebsparameter anpassen kann, um beispielsweise die optimale Soll-Verweilzeit zu erreichen.

Wenn sich die ermittelte momentane Verweilzeit ändert und einer der Grenzen des Verweilzeit-Bereichs annähert, was beispielsweise auftreten kann, wenn Betriebsparameter, wie die Zykluszeit und/oder eine Schneckendrehzahl verändert werden, so wird mittels der Anzeigevorrichtung 8 ein akustisches und/oder optisches Signal an den Bediener der Spritzgießmaschine 1 ausgegeben. Ebenfalls wird ein akustisches und/oder optisches Signal an den Bediener ausgegeben, wenn die momentane Verweilzeit eine der Grenzen des Verweilzeit-Bereichs überschreitet. Dadurch wird dem Bediener mitgeteilt, dass die Verweilzeit den erlaubten Verweilzeit-Bereich verlassen wird bzw. schon verlassen hat.

Zur anschließenden Optimierung des Betriebs der Spritzgießmaschine 1 gibt es verschiedene Möglichkeiten. Zum einen kann die Steuervorrichtung 15 die Betriebsparameter der Spritzeinheit 10 automatisch so regeln, dass die Verweilzeit innerhalb des Verweilzeit-Bereichs bleibt. Hierbei wird einer oder mehrere der folgenden Betriebsparameter geregelt: Zykluszeit, Schneckendrehzahl, Staudruck, Schneckenhub.

Alternativ kann die Einstellung der Betriebsparameter der Spritzeinheit 10 dem Bediener überlassen werden, wobei dieser mittels der Eingabevorrichtung 16 manuell die Betriebsparameter der Spritzeinheit 10 anpassen kann.

In beiden Fällen erfolgt ein Stoppen der Spritzeinheit 10, wenn die ermittelte momentane Verweilzeit den Verweilzeit-Bereich verlässt. Dadurch wird verhindert, dass beispielsweise noch nicht vollständig aufgeschmolzener Werkstoff 4 oder bereits zu lange geheizter Werkstoff 4 in das Spritzgießwerkzeug 5 eingespritzt wird. Ferner wird dadurch verhindert, dass eine Beschädigung der Spritzgießmaschine 1 beispielsweise aufgrund von zu zähen Fleißeigenschaften des Werkstoffs 4 innerhalb der Spritzeinheit 10 auftritt.

Für den Fall, dass die Verweilzeit eine Obergrenze des Verweilzeit-Bereichs überschreitet, ist ein Teil des Werkstoffs 4 innerhalb des Zylinders 2 bereits beschädigt, sodass dieser vor einem erneuten Start eines Produktionszyklus der Spritzeinheit 10 ausgetragen werden muss. In Abhängigkeit der Verweilzeit wird dabei mittels der Erfassungsvorrichtung 8 ermittelt, welches Volumen des gesamten Werkstoffvolumens innerhalb des Schneckenkanalvolumens auszutragen ist. Weist beispielsweise der Teil des Werkstoffvolumens, welcher sich in den vordersten beiden Windungen der Schnecke 3 ausgehend von einer Schneckenspitze 31 befindet, beispielhaft gekennzeichnet durch den Bereich A, eine Verweilzeit auf, welche oberhalb der Obergrenze des Verweilzeit-Bereichs liegt, so ist dieses Werkstoffvolumen vor dem Start des nächsten Produktionszyklus der Spritzeinheit 10 auszutragen. Basierend auf diesem ermittelten auszutragenden Werkstoffvolumen, wird eine Anzahl an Abspritzzyklen ermittelt, welche vor dem Start des nächsten Produktionszyklus der Spritzeinheit 10 durchzuführen ist. Diese ermittelte Anzahl an Abspritzzyklen wird dem Bediener anschließend mittels der Anzeigevorrichtung 8 angezeigt. Vorzugsweise kann der Bediener dabei wählen, ob er diese Anzahl an Abspritzzyklen manuell durchführt, oder ob die Spritzgießmaschine 1 mittels Steuerung durch die Steuervorrichtung 15 dies automatisch durchführt.

Die Spritzgießmaschine 1 zeichnet sich somit zu einem besonders einfachen und komfortablen Betrieb aus, wobei zuverlässig ermöglicht wird, dass Bauteile mit optimalen Materialeigenschaften hergestellt werden können, indem die Verweilzeit des Werkstoffs 4 permanent berechnet, aufgezeichnet und überwacht wird. Dabei wird zudem verhindert, dass Beschädigungen der Spritzgießmaschine 1 durch ungeeignete Materialeigenschaften des Werkstoffs 4 auftreten können.

Weiterhin erlaubt die Spritzgießmaschine 1 durch die Überwachung und Regelung der Verweilzeit eine besonders flexible Betriebsweise im Hinblick auf unterschiedlichste herzustellende Bauteile. So kann bei einem Artikelwechsel ferner die Aufheizzeit des Werkstoffs 4 ermittelt werden und basierend auf der Aufheizzeit nach dem Artikelwechsel ein Anfahrprozess ermittelt werden. Der Anfahrprozess kann ebenfalls entweder dem Bediener zur manuellen Betätigung bereitgestellt werden und/oder automatisch von der Steuervorrichtung 15 durchgeführt werden.

Neben der vorstehenden schriftlichen Beschreibung der Erfindung wird zu deren ergänzender Offenbarung hiermit explizit auf die zeichnerische Darstellung der Erfindung in der Fig. 1 Bezug genommen.

### Bezugszeichenliste

- 1: Spritzgießmaschine
- 2: Zylinder
- 3: Schnecke
- 4: Werkstoff
- 5: Spritzgießwerkzeug
- 6: Heizvorrichtung
- 7: Heißkanal
- 8: Anzeigevorrichtung
- 9: Erfassungsvorrichtung
- 10: Spritzeinheit
- 11: Kanal
- 15: Steuervorrichtung
- 16: Eingabevorrichtung
- 31: Schneckenspitze
- 35: Längsachse
- 40: Schuss
- 45: Werkstoffreservoir
- 46: Einfüllöffnung
- 50: Form
- 51: Austrittsöffnung
- A: Bereich auszutragendes Werkstoffvolumen

## Patentansprüche

1. Verfahren zum Betreiben einer Spritzgießmaschine (1), welche eine Spritzeinheit (10) mit einem Zylinder (2) und einer im Zylinder (2) aufgenommenen Schnecke (3) aufweist, zum Plastifizieren eines Werkstoffs (4), insbesondere Kunststoff, und zum Einspritzen des plastifizierten Werkstoffs (4) in ein Spritzgießwerkzeug (5), umfassend die Schritte:
- Ermitteln einer Verweilzeit des Werkstoffs (4), insbesondere eines Schussvolumens eines bevorstehenden Schusses (40), in der Spritzeinheit (10),
- Vergleich der ermittelten Verweilzeit mit einem vordefinierten Verweilzeit-Bereich,
- Betätigen einer Heizvorrichtung (6) der Spritzeinheit (10) basierend auf der ermittelten Verweilzeit, wenn sich die Verweilzeit innerhalb des Verweilzeit-Bereichs befindet, und
- Stoppen der Spritzeinheit (10) wenn die ermittelte Verweilzeit den Verweilzeit-Bereich verlässt, oder Regeln der Spritzeinheit (10) derart, dass die Verweilzeit innerhalb des Verweilzeit-Bereichs bleibt.

2. Verfahren nach Anspruch 1, wobei die Verweilzeit basierend auf einem Schneckenkanalvolumen und/oder einer Schneckenposition, insbesondere nach einem Einspritzvorgang, und/oder einer Zykluszeit ermittelt wird.

3. Verfahren nach einem der vorhergehenden Ansprüche, wobei die Spritzgießmaschine (1) ferner einen werkzeugseitigen Heißkanal (7) aufweist, und wobei die Verweilzeit basierend auf einem Volumen des Heißkanals (7) ermittelt wird.

4. Verfahren nach einem der vorhergehenden Ansprüche, wobei der vordefinierte Verweilzeit-Bereich basierend auf Materialeigenschaften des Werkstoffs (4) ermittelt wird.

5. Verfahren nach einem der vorhergehenden Ansprüche, wobei zum Regeln der Spritzeinheit (10) der Spritzgießmaschine (1) einer oder mehrere der folgenden Betriebsparameter der Spritzeinheit (10) geregelt werden: Zykluszeit, Schneckendrehzahl, Staudruck, Schneckenhub.

6. Verfahren nach einem der vorhergehenden Ansprüche, wobei mittels der Heizvorrichtung (6) der Spritzgießmaschine (1) der Zylinder (2) und/oder die Schnecke (3) und/oder ein werkzeugseitiger Heißkanal (7) der Spritzgießmaschine (1) verweilzeitgeregelt geheizt wird.

7. Verfahren nach einem der vorhergehenden Ansprüche, wobei mittels einer Anzeigevorrichtung (8) dem Bediener der Spritzgießmaschine (1) permanent die aktuelle Verweilzeit des Werkstoffs (4) angezeigt wird.

8. Verfahren nach einem der vorhergehenden Ansprüche, wobei mittels einer Anzeigevorrichtung (8) ein Signal an den Bediener der Spritzgießmaschine (1) ausgegeben wird, wenn die Verweilzeit sich einer der Grenzen des Verweilzeit-Bereichs nähert, und/oder eine der Grenzen überschreitet.

9. Verfahren nach einem der vorhergehenden Ansprüche, wobei mittels einer Anzeigevorrichtung (8) dem Bediener der Spritzgießmaschine (1) Hinweise zum Anpassen der Betriebsparameter der Spritzgießmaschine (1) gegeben werden.

10. Verfahren nach einem der vorhergehenden Ansprüche, wobei beim Ermitteln der Verweilzeit Stillstandszeiten der Spritzeinheit (10) berücksichtigt werden.

11. Verfahren nach einem der vorhergehenden Ansprüche, wobei das Verfahren im Falle eines Überschreitens einer Obergrenze des Verweilzeit-Bereichs den folgenden Schritt umfasst:
- Ermitteln eines auszutragenden Werkstoffvolumens aus der Spritzeinheit (10), welches vor dem Start eines Produktionszyklus der Spritzeinheit (10) auszutragen ist.

12. Verfahren nach Anspruch 11, wobei basierend auf dem auszutragenden Werkstoffvolumen eine Anzahl an Abspritzzyklen ermittelt wird, welche vor dem Start des Produktionszyklus der Spritzeinheit (10) durchzuführen sind, insbesondere wobei die ermittelte Anzahl an Abspritzzyklen dem Bediener der Spritzgießmaschine (1) angezeigt wird.

13. Verfahren nach einem der vorhergehenden Ansprüche, wobei das Verfahren im Falle eines Artikelwechsels ferner die folgenden Schritte umfasst:
- Ermitteln einer Aufheizzeit des Werkstoffs (4), und
- Ermitteln eines Anfahrprozesses nach dem Artikelwechsel und basierend auf der Aufheizzeit.

14. Spritzgießmaschine, umfassend:
- ein Spritzgießwerkzeug (5),
- eine Spritzeinheit (10) mit einem Zylinder (2) und einer im Zylinder (2) aufgenommenen Schnecke (3), zum Plastifizieren eines Werkstoffs (4), insbesondere Kunststoff, und zum Einspritzen des plastifizierten Werkstoffs (4) in das Spritzgießwerkzeug (5),
- eine Heizvorrichtung (6), welche eingerichtet ist zum Heizen der Spritzeinheit (10),
- eine Erfassungsvorrichtung (9), welche eingerichtet ist, eine Verweilzeit des Werkstoffs (4), insbesondere eines Schussvolumens eines bevorstehenden Schusses (40), in der Spritzeinheit (10) zu ermitteln, und
- eine Steuervorrichtung (15), welche eingerichtet ist:
- die Heizvorrichtung (6) basierend der ermittelten Verweilzeit zu betätigen, wenn sich die Verweilzeit innerhalb des Verweilzeit-Bereichs befindet, und
- die Spritzeinheit (10) zu stoppen, wenn die ermittelte Verweilzeit den Verweilzeit-Bereich verlässt, oder die Spritzeinheit (10) derart zu regeln, dass die Verweilzeit innerhalb des Verweilzeit-Bereichs verbleibt.

15. Spritzgießmaschine nach Anspruch 14, wobei die Heizvorrichtung (6) eingerichtet ist, den Zylinder (2) und/oder die Schnecke (3) und/oder einen Heißkanal (7) der Spritzeinheit (10) zu heizen.

16. Spritzgießmaschine nach einem der Ansprüche 14 oder 15, ferner umfassend eine Anzeigevorrichtung (8), welche eingerichtet ist zur Anzeige der ermittelten Verweilzeit.

17. Spritzgießmaschine nach einem der Ansprüche 14 bis 16, ferner umfassend eine Eingabevorrichtung (16), zur manuellen Eingabe von Betriebsparametern.
